# EUROPÄISCHE PATENTSCHRIFT

(11) **EP 3 184 917 B1**
(45) Veröffentlichungstag und Bekanntmachung des Hinweises auf die Patenterteilung: **27.01.2021**
(21) Anmeldenummer: 16002712.4
(22) Anmeldetag: 21.12.2016
(51) Int. Cl.: F16K 1/44, F24D 19/10, F16K 7/02, F16K 3/24, F16K 27/02

(54) **STRÖMUNGSMENGENREGLER, KOPPELTEIL UND HEIZUNG-BRAUCHWASSER-ANLAGE**
FLOW RATE CONTROLLER, COUPLING PIECE AND HEATING SURFACE WATER INSTALLATION
RÉGULATEUR DE DÉBIT, RACCORD ET INSTALLATION DE CHAUFFE-EAU SANITAIRE

(30) Priorität: 24.12.2015 DE 102015016746; 20.01.2016 DE 102016000465; 05.07.2016 DE 102016008096
(43) Veröffentlichungstag der Anmeldung: 28.06.2017
(73) Patentinhaber: Delta Systemtechnik GmbH, 29227 Celle (DE)
(72) Erfinder: Geck, Thomas, DE - 30559 Hannover (DE)
(74) Vertreter: Farago-Schauer, Peter Andreas

(56) Entgegenhaltungen:
- EP-A1- 2 453 332
- DE-U1- 20 307 380
- GB-A- 1 270 101

## Beschreibung

Die Erfindung betrifft einen Strömungsmengenregler zum Regeln von Fluidvolumenströmen einer Heizung-Brauchwasser-Anlage umfassend eine Brauchwasserkreislauf seitige, erste Stellventileinrichtung mit einem ersten Gehäuseteil des Strömungsmengenreglers und umfassend eine Heizwasserkreislauf seitige, weitere Stellventileinrichtung mit einem weiteren Gehäuseteil des Strömungsmengenreglers, bei welchem die erste Stellventileinrichtung und die weitere Stellventileinrichtung mittels eines Betätigungselements zum Betätigen von Steuerkolben des Strömungsmengenreglers miteinander wirkverbunden sind.

Die Erfindung betrifft darüber hinaus einen Strömungsmengenregler zum Regeln von Fluidvolumenströmen einer Heizung-Brauchwasser-Anlage umfassend eine Brauchwasserkreislauf seitige, erste Stellventileinrichtung mit einem ersten Gehäuseteil des Strömungsmengenreglers und umfassend eine Heizwasserkreislauf seitige, weitere Stellventileinrichtung mit einem weiteren Gehäuseteil des Strömungsmengenreglers, bei welchem die erste Stellventileinrichtung und die weitere Stellventileinrichtung zum einen in einem Gehäusekoppelbereich und zum anderen mittels eines Betätigungselements zum Betätigen von Steuerkolben des Strömungsmengenreglers miteinander wirkverbunden sind.

Die Erfindung betrifft des Weiteren ein Koppelteil zum Koppeln einer Brauchwasserkreislauf seitigen, ersten Stellventileinrichtung eines Strömungsmengenreglers und einer Heizwasserkreislauf seitigen, weiteren Stellventileinrichtung des Strömungsmengenreglers, mit einer ersten Aufnahme zum Aufnehmen eines ersten Gehäuseteils der ersten Stellventileinrichtung, mit einer weiteren Aufnahme zum Aufnehmen eines weiteren Gehäuseteils der weiteren Stellventileinrichtung und mit einer Durchgangsbohrung zum Aufnehmen eines gemeinsamen Betätigungselements der ersten und der zweiten Stellventileinrichtung.

Die Erfindung betrifft auch eine Heizung-Brauchwasser-Anlage zum Erwärmen von Brauchwasser mit einem Strömungsmengenregler zum Regeln eines Heizwasservolumenstroms in Abhängigkeit von einem an wenigstens einer Zapfstelle angeforderten Brauchwasservolumenstrom, wobei der Strömungsmengenregler zwei durch ein gemeinsames Betätigungselement regelungstechnisch miteinander wirkverbundene Stellventileinrichtungen umfasst.

Gattungsgemäße Strömungsmengenregler einer Heizungs-Brauchwasser-Anlage sind aus dem Stand der Technik bereits hinlänglich bekannt.

Mithilfe solcher Strömungsmengenregler wird in Abhängigkeit von einer an einer Zapfstelle angeforderten Menge an warmen Brauchwasser eine entsprechende Menge eines Heizmediums an einem Wärmeübertrager zum Erwärmen dieses Brauchwassers bereitgestellt, um eben das den Wärmeübertrager durchströmende Brauchwasser in ausreichendem Maße betriebssicher erwärmen zu können.

Ein gattungsgemäßer Strömungsmengenregler ist beispielhaft in der DE 20 2008 006 054 U1 beschrieben, in welcher an dem Strömungsmengenregler eine verbesserte Dichtungsanordnung zum fluidischen Trennen eines Brauchwasserströmungswegs und eines Heizmediumströmungswegs vorgeschlagen ist Strömungsmengenregler gemäß dem Oberbegriff von Anspruch 1 sind aus GB1210101A und DE20307380U1 bekannt.

Der Erfindung liegt die Aufgabe zugrunde, gattungsgemäße Strömungsmengenregler weiterzuentwickeln. Insbesondere liegt der Erfindung die Aufgabe zugrunde, am gattungsgemäßen Strömungsmengenregler eine Verkeimungsgefahr des sich in dem Brauchwasserkreislauf befindlichen Brauchwassers zu verringern und idealerweise zur Gänze zu vermeiden.

Diese Aufgaben werden nach einem ersten Aspekt der Erfindung von einem Strömungsmengenregler zum Regeln von Fluidvolumenströmen einer Heizung-Brauchwasser-Anlage umfassend eine Brauchwasserkreislauf seitige, erste Stellventileinrichtung mit einem ersten Gehäuseteil des Strömungsmengenreglers und umfassend eine Heizwasserkreislauf seitige, weitere Stellventileinrichtung mit einem weiteren Gehäuseteil des Strömungsmengenreglers gelöst, bei welchem die erste Stellventileinrichtung und die weitere Stellventileinrichtung mittels eines Betätigungselements zum Betätigen von Steuerkolben des Strömungsmengenreglers miteinander wirkverbunden sind, wobei sich der Strömungsmengenregler dadurch auszeichnet, dass die beiden Stellventileinrichtungen thermisch voneinander entkoppelt sind.

Dadurch, dass die beiden Stellventileinrichtungen thermisch voneinander entkoppelt sind, gelangt weniger Wärmeenergie von der Seite des warmen bzw. heißen Heizwasserkreislaufs zu der Seite des Brauchwasserkreislaufs, wodurch das sich in dem Strömungsmengenregler befindliche Brauchwasser weniger stark, bevorzugt nahezu gar nicht, durch die in dem Heizwasser innewohnende Wärmeenergie aufgewärmt wird.

Ein unerwünschtes Erwärmen von Brauchwasser ist insbesondere immer dann besonders problematisch, wenn auf Seiten des Brauchwasserkreislaufs kein Brauchwasser angefordert wird und dementsprechend auch nicht strömt. Insbesondere bei über einem längeren Zeitraum stillstehendem Brauchwasser ist die Gefahr einer unbedingt zu vermeidenden Verkeimung besonders hoch.

Die erste Stellventileinrichtung ist vorliegend Bestandteil des Brauchwasserkreislaufs.

Der Brauchwasserkreislauf liegt hierbei auf der Sanitärseite einer brauchwasserführenden Einrichtung, wie etwa eines Brauchwasserleitungssystems eines Gebäudes. Insofern führt der Brauchwasserkreislauf insbesondere zum Verzehr geeignetes Trinkwasser, welches an einer Zapfstelle angefordert werden kann und hohen Hygieneanforderungen unterliegt. Somit ist der Brauchwasserkreislauf offen.

Der Heizwasserkreislauf hingegen befindet sich hiervon räumlich getrennt auf einer Heizungsseite und ist in der Regel geschlossen, so dass darin umgewälzte Medien nicht in Kontakt mit Personen kommen.

Somit ist die weitere Stellvorrichtung Bestandteil des Heizwasserkreislaufs.

Es versteht sich, dass insofern die in den jeweiligen Kreisläufen strömenden Medien nicht vermischt werden dürfen, um insbesondere das Brauchwasser nicht durch ein Heizmedium bzw. Heizwasser zu kontaminieren.

Die Begrifflichkeiten "Stellventileinrichtungen" beschreiben jeweils eine Steuerkolben führende Einrichtung mit einem Gehäuse, durch welches entweder Brauchwasser auf der Brauchwasserkreislaufseite oder Heizwasser auf der Heizwasserkreislaufseite geführt ist.

Mittels der Steuerkolben werden die Durchflussmengen des jeweiligen Fluides eingestellt.

Somit umfasst der Strömungsmengenregler mindestens zwei Stellventileinrichtungen, nämlich eine auf Seiten des Brauchwasserkreislaufs und eine auf Seiten des Heizwasserkreislaufs.

Der Begriff "Betätigungselement" bezeichnet ein Führungsstangenelement oder dergleichen, welches einen Sanitärsteuerkolben der ersten Stellventileinrichtung auf Seiten des Brauchwasserkreislaufs und einen Heizwassersteuerkolben der weiteren Stellventileinrichtung auf Seiten des Heizwasserkreislaufs miteinander verbindet, so dass diese Steuerkolben bevorzugt synchron zueinander bewegt werden können.

An dieser Stelle sei noch erwähnt, dass die Begriffe "steuern" und "regeln" im Sinne der Erfindung synonym verwendet werden.

Die vorliegende thermische Entkoppelung der beiden miteinander wirkverbundenen Stellventileinrichtungen gelingt besonders gut, indem ein Wärmeübergang zwischen den Gehäuseteilen der Stellventileinrichtungen unterbunden bzw. zumindest signifikant reduziert ist.

Somit wird die Aufgabe nach einem weiteren Aspekt der vorliegenden Erfindung auch von einem Strömungsmengenregler zum Regeln von Fluidvolumenströmen einer Heizung-Brauchwasser-Anlage umfassend eine Brauchwasserkreislauf seitige, erste Stellventileinrichtung mit einem ersten Gehäuseteil des Strömungsmengenreglers und umfassend eine Heizwasserkreislauf seitige, weitere Stellventileinrichtung mit einem weiteren Gehäuseteil des Strömungsmengenreglers gelöst, bei welchem die erste Stellventileinrichtung und die weitere Stellventileinrichtung zum einen in einem Gehäusekoppelbereich und zum anderen mittels eines Betätigungselements zum Betätigen von Steuerkolben des Strömungsmengenreglers miteinander wirkverbunden sind, wobei sich der Strömungsmengenregler dadurch auszeichnet, dass zumindest eines der Gehäuseteile in dem Gehäusekoppelbereich derart ausgestaltet ist, dass eine Wärmeübertragung auf das andere der Gehäuseteile reduziert ist.

Zum Reduzieren der Wärmeübertragung von einem wärmeren Gehäuseteil zu einem kälteren Gehäuseteil können eines oder auch beide Gehäuseteile hinsichtlich ihrer Gestalt und/oder ihres Werkstoffs verschiedenstartig ausgestaltet sein. Beispielsweise sind eines oder beide Gehäuseteile derart ausgestaltet, dass zwischen Ihnen nur kleinere bzw. nur eine geringere Anzahl an Wärmebrücken besteht, wie später noch ausführlicher beschrieben ist.

Gemäß der Erfindung, mittels welcher die beiden Stellventileinrichtungen thermisch voneinander entkoppelbar sind, sieht vor, dass das erste Gehäuseteil und das weitere Gehäuseteil durch ein Koppelteil fest, aber lösbar miteinander verbunden sind, wobei das Koppelteil zumindest teilweise aus einem Material mit einer thermisch geringeren Leitfähigkeit als eines der Gehäuseteile hergestellt ist.

Durch ein derartiges Koppelteil kann der Wärmeübergang bzw. die Wärmeübertragung zwischen den beiden Gehäuseteilen bzw. zwischen den beiden Stellventileinrichtungen signifikant reduziert werden. Das Koppelteil umgibt das Betätigungselement bevorzugt konzentrisch.

Die vorliegende Aufgabe wird insofern nach einem weiteren Aspekt der vorliegenden Erfindung von einem Strömungsmengenregler zum Regeln von Fluidvolumenströmen einer Heizung-Brauchwasser-Anlage umfassend eine Brauchwasserkreislauf seitige, erste Stellventileinrichtung mit einem ersten Gehäuseteil des Strömungsmengenreglers und umfassend eine Heizwasserkreislauf seitige, weitere Stellventileinrichtung mit einem weiteren Gehäuseteil des Strömungsmengenreglers gelöst, bei welchem die erste Stellventileinrichtung und die weitere Stellventileinrichtung mittels eines Betätigungselements miteinander wirkverbunden sind, wobei sich der Strömungsmengenregler dadurch auszeichnet, dass das erste Gehäuseteil und das zweite Gehäuseteil durch ein Koppelteil körperlich voneinander getrennt sind, wobei dem Koppelteil eine Wärmeleitfähigkeit α ≤ 10 W/(m • K) vorzugsweise eine Wärmeleitfähigkeit α ≤ 1,0 W/(m • K), innewohnt.

Ist das Koppelteil aus einem Werkstoff mit der vorgeschlagenen Wärmeleitfähigkeit hergestellt, kann eine Wärmeübertragung zwischen den beiden Gehäuseteilen ebenfalls signifikant reduziert werden.

Es versteht sich, dass insbesondere das Koppelteil je nach Ausgestaltung und Anwendung des Strömungsmengenreglers aus unterschiedlichen Werkstoffen hergestellt sein kann.

Ist das Koppelteil aus einem Kunststoffmaterial oder aus einem Compound hieraus, insbesondere aus Polyoxymethylen (POM), hergestellt, kann eine thermische Entkopplung zwischen den beiden Stellventileinrichtungen und damit auch eine Wärmeübertragung zwischen den beiden Gehäuseteilen besonders kostengünstig erzielt werden.

Kumulativ oder alternativ ist es vorteilhaft, wenn das Koppelteil wenigstens eines querschnittsreduzierten Bereichs aufweist, um eine Wärmeübertragung zwischen den Gehäuseteilen zu reduzieren.

Derartige querschnittsreduzierte Bereiche können konstruktiv einfach durch Materialausnehmungen realisiert sein.

Beispielsweise können an dem Koppelteil Materialausnehmungen zum Reduzieren der Wärmeübertragung zwischen den Gehäuseteilen durch in Umfangsrichtung verlaufende Nuten ausgestaltet sein, so dass ein querschnittsreduzierter Bereich an dem Koppelteil konstruktiv einfach formuliert sein kann.

Beispielsweise kann das Koppelteil hierdurch auch mit Zungenelementen ausgeführt werden, mittels welchen es zumindest an einem der Gehäuseteile formschlüssig anordenbar ist, um so einen querschnittsreduzierten Bereich realisieren zu können.

Auch wenn das vorliegende Koppelteil durch unterschiedliche Herstellungsmethoden bereitgestellt werden kann, ist es vorteilhaft, wenn das Koppelteil spritzgegossen und/oder spanend hergestellt ist.

Ferner ist es vorteilhaft, wenn das Koppelteil wenigstens einen Dichtungssitz für Dichtungselemente aufweist, so dass das Koppelteil sogleich die Funktion einer Dichtungseinrichtung übernehmen kann.

Eine Reduzierung der Wärmeübertragung zwischen den beiden Gehäuseteilen und somit auch eine verbesserte thermische Entkopplung der beiden Stellventileinrichtungen voneinander kann kumulativ oder alternativ ebenfalls erreicht werden, wenn zumindest eines der Gehäuseteile, vorzugsweise das weitere Gehäuseteil, Kühlrippenelemente aufweist, um eine Wärmeübertragung zwischen den Gehäuseteilen zu reduzieren.

Zweckmäßig ist es darüber hinaus, wenn wenigstens eines der Gehäuseteile eine Aufnahmebuchse oder einen Aufnahmezapfen umfasst, wobei die Aufnahmebuchse und/oder der Aufnahmezapfen Materialaussparungen aufweist, um wärmeenergieübertragene Kontaktflächen zwischen den Gehäuseteilen zu reduzieren.

Die Aufnahmebuchse und der Aufnahmezapfen dienen beispielsweise der Aufnahme eines komplementär ausgebildeten Gehäuseteils oder Koppelteils.

Ist beispielsweise an dem Strömungsmengenregler ein Koppelteil im Sinne der vorliegenden Erfindung vorgesehen, ist es vorteilhaft, wenn wenigstens eines der Gehäuseteile eine Aufnahmebuchse oder einen Aufnahmezapfen umfasst, an welchem ein Koppelteil zum Verbinden des ersten Gehäuseteils und des weiteren Gehäuseteils anordenbar ist, wobei die Aufnahmebuchse und/oder der Aufnahmezapfen Materialaussparungen aufweist, um wärmeenergieübertragene Kontaktflächen zwischen den Gehäuseteilen und dem Koppelteil zu reduzieren.

Eine besonders effektive und damit vorteilhafte thermische Entkopplung im Sinne vorliegender Erfindung kann gewährleistet werden, wenn Materialaussparungen an der Aufnahmebuchse und/oder dem Aufnahmezapfen sich mit ihrer jeweiligen Längserstreckung in Längsrichtung des Betätigungselements erstrecken.

Erstrecken sich die Materialaussparungen insbesondere in Längsrichtung des Betätigungselements des Strömungsmengenreglers gelingt es konstruktiv einfach, insbesondere sich an den Gehäuseteilen befindliche längliche Kopplungszungen zu realisieren, wodurch die Nachteile einer unerwünschten Wärmeübertragung zwischen diesen Gehäuseteilen ebenfalls besonders gut vermieden werden können.

Unabhängig von den übrigen Merkmalen an der vorliegenden Erfindung gelingt eine thermische Entkoppelung der beiden Stellventileinrichtungen auch dadurch, dass die Brauchwasserkreislauf seitige Stellventileinrichtung einen Sanitätssteuerkolben aus einem Kunststoffmaterial, insbesondere aus Polyoxymethylen (POM), aufweist.

Auch ist es unabhängig von den übrigen Merkmalen der vorliegenden Erfindung vorteilhaft, wenn die Heizwasserkreislauf seitige, weitere Stellventileinrichtung ein Heizungssteuerungskolben aus einem Kunststoffmaterial, insbesondere aus Polytetrafluorethylen (PTFE), aufweist, wodurch kumulativ oder alternativ eine thermische Entkoppelung erzielbar ist.

Ebenfalls unabhängig von den übrigen Merkmalen der vorliegenden Erfindung ist es zum Reduzieren der Wärmeübertragung zwischen den beiden Stellventileinrichtungen vorteilhaft, wenn das Betätigungselement aus einem Kunststoffmaterial oder einem Compound hieraus, insbesondere aus einem Karbonfaser verstärkten Kunststoffmaterial, oder aus einem Keramikmaterial hergestellt ist.

Das Betätigungselement ist bevorzugt aus Keramikmaterial hergestellt.

Weist das Betätigungselement bereichsweise Querschnittsreduzierungen, insbesondere durch Materialaussparungen, auf, um eine Wärmeübertragung zwischen den Gehäuseteilen der Stellventileinrichtungen zu reduzieren, können die beiden Stellventileinrichtungen thermisch voneinander nochmals besser entkoppelt werden.

Ist das Betätigungselement ferner zumindest teilweise von einem Koppelteil zum Koppeln der beiden Gehäuseteile der Stellventileinrichtungen umgeben, können diese beiden Gehäuseteile thermisch besonders gut voneinander entkoppelt werden.

Ferner kann die Verkeimungsgefahr an dem Strömungsmengenregler weiter reduziert werden, wenn kumulativ oder alternativ wenigstens teilweise Flächen, insbesondere Wasserkontaktflächen, Gleitflächen oder dergleichen, von Bauteilen des Strömungsmengenreglers Beschichtungen, insbesondere Antihaft-, Gleit- und/ oder Korrosionsbeschichtungen, wie etwa Xylan©-Beschichtungen 8110/G0975 grey/black oder ähnlichem aufweisen.

Derartig konstruierte Flächen zeichnen sich speziell dadurch aus, dass sie insbesondere im Zusammenhang mit Brauchwasser zertifiziert sind, so dass diese Flächen folglich bevorzugt an der Sanitärseite des Strömungsmengenreglers verwendet werden können.

Die Aufgabe wird nach einem weiteren Aspekt der Erfindung des Weiteren von einem Koppelteil zum Koppeln einer Brauchwasserkreislauf seitigen, ersten Stellventileinrichtung eines Strömungsmengenreglers und einer Heizwasserkreislauf seitigen, weiteren Stellventileinrichtung des Strömungsmengenreglers, mit einer ersten Aufnahme zum Aufnehmen eines ersten Gehäuseteils der ersten Stellventileinrichtung, mit einer weiteren Aufnahme zum Aufnehmen eines weiteren Gehäuseteils der weiteren Stellventileinrichtung und mit einer Durchgangsbohrung zum Aufnehmen eines gemeinsamen Betätigungselements der ersten und der zweiten Stellventileinrichtung gelöst, wobei das Koppelteil zumindest teilweise aus einem Material mit einer thermisch geringeren Leitfähigkeit als eines der Gehäuseteile hergestellt ist.

Wie bereits beschrieben, werden mit einem derartigen Koppelteil aus einem thermisch geringer leitfähigen Material insbesondere miteinander zu verbindende Gehäuseteile des Strömungsmengenreglers thermisch besonders gut voneinander entkoppelt.

Weist das Koppelteil des Weiteren noch eine radial außen liegende Dichtungsnut auf, welche umlaufend an der äußeren Mantelfläche des Koppelteils angeordnet ist, können zudem eine Sanitärseite und eine Heizungsseite des Strömungsmengenreglers auch fluidisch voneinander mittels des Koppelteils gut entkoppelt werden.

Insofern kann das Koppelteil nicht nur zur thermischen Entkopplung von Gehäuseteilen bzw. Stellventileinrichtungen des Strömungsmengenreglers eingesetzt werden, sondern sogleich auch als Tragelement von Dichtungselementen des Strömungsmengenreglers. Hierdurch können konstruktiv einfach weitere Dichtungsebenen an dem Strömungsmengenregler zwischen dem Brauchwasserkreislauf und dem Heizwasserkreislauf etabliert werden.

Oder an den jeweiligen Stellventileinrichtungen bzw. an deren Gehäuseteile kann auf Dichtungselemente und damit auch auf diesbezügliche Dichtungselementeaufnahmen verzichtet werden, so dass Stellventileinrichtungen bzw. deren Gehäuseteile konstruktiv einfacher aufgebaut sein können.

Das Dichtungsvermögen zwischen dem Brauchwasserkreislauf und dem Heizwasserkreislauf des Strömungsmengenreglers kann darüber hinaus signifikant erhöht werden, wenn das Koppelteil eine radial innenliegende Dichtungsaufnahme zum Aufnehmen einer X-Ring-Dichtung, einer Quad-Ring-Dichtung oder dergleichen aufweist, wodurch gegenüber dem Betätigungselement mindestens vier umlaufende Dichtflächen erzeugt sind.

Mittels dieser radial innenliegenden Dichtungsaufnahme können gegenüber dem Betätigungselement eines Strömungsmengenreglers zu bisherigen Dichtungsebenen zusätzliche Dichtungsebenen geschaffen werden.

Oder es kann vorteilhafterweise auch auf Dichtungseinrichtungen an den Stellventileinrichtungen bzw. deren Gehäuseteile verzichtet werden, wodurch sich der Aufbau des Strömungsmengenreglers insgesamt vereinfachen lässt, da Dichtungseinrichtungen an dem relativ einfach herzustellenden Koppelteil wesentlich günstiger eingerichtet werden können.

Eine besonders vorteilhafte Ausführungsvariante hinsichtlich des Koppelteils sieht vor, dass das Koppelteil wenigstens eine Querbohrung aufweist, um einerseits eine Wärmeübertragung zwischen den Gehäuseteilen des Strömungsmengenreglers zu reduzieren und um andererseits im Sinne einer Leckagebohrung einen Fluidaustausch zwischen dem Brauchwasserkreislauf und dem Heizwasserkreislauf des Strömungsmengenreglers zu vermeiden.

Hierdurch kann auf konstruktiv einfachste Weise eine zusätzliche Sicherheit bezüglich einer Kontaminationsgefahr des Brauchwassers durch Heizwasser erzielt werden, sollten hierfür vorgesehene Dichtungen versagen.

Die Aufgabe der Erfindung wird auch von einer Heizung-Brauchwasser-Anlage zum Erwärmen von Brauchwasser mit einem Strömungsmengenregler zum Regeln eines Heizwasservolumenstroms in Abhängigkeit von einem an wenigstens einer Zapfstelle angefordertem Brauchwasservolumenstrom gelöst, wobei die Heizung-Brauchwasser-Anlage sich durch einen Strömungsmengenregler und/oder durch ein Koppelteil nach einem der hier beschriebenen Merkmale auszeichnet.

Ist die Heizung-Brauchwasser-Anlage zum Erwärmen von Brauchwasser durch einen im Sinne der Erfindung vorgeschlagenen Strömungsmengenregler oder durch ein im Sinne der Erfindung vorgeschlagenes Koppelteil ausgerüstet, kann die Gefahr einer Verkeimung insbesondere des Brauchwassers signifikant reduziert werden, da das Brauchwasser im Bereich des Strömungsmengenreglers durch unerwünschte Wärmeübertragung von der Heizungsseite des Strömungsmengenreglers auf die Sanitärseite des Strömungsmengenreglers erheblich reduziert ist.

Darüber hinaus kann die Effektivität der Heizung-Brauchwasser-Anlage verbessert werden, wenn bei herkömmlichen Strömungsmengenregler-Anschlussmaßen von ca. 95,2 mm einerseits und von ca. 105 mm andererseits ein Regelweg des Betätigungselements des Strömungsmengenreglers mehr als 16 mm, vorzugsweise mehr als 18 mm, und insbesondere 19,75 mm beträgt.

Gemäß eines weiteren wichtigen Aspekts der Erfindung sei hier noch die Möglichkeit erwähnt, dass weitere Funktionsbauteile des Strömungsmengenreglers aus einem Kunststoff oder einem Kunststoff-Compound hergestellt sein können, wie insbesondere Gehäuse usw.

Hierzu eignen sich nahezu alle technischen Kunststoffe für trinkwassertechnische bzw. heizungstechnische Anwendungen, wobei zum Beispiel folgende Werkstoffe bevorzugt zum Einsatz kommen können, wie etwa PVDF (Polyvinylidenfluorid), PPSU (Polyphenylsulfon), PSU (Polysulfon) oder dergleichen.

Es versteht sich, dass die vorstehend genannten Werkstoffe keine abschließende Aufzählung darstellen, sondern dass hierzu auch zukünftig erst noch zu entwickelnde Kunststoffe bzw. Kunststoff-Compound zählen, aus welchen ein im Sinne vorliegender Erfindung verwendeter Strömungsmengenregler zumindest teilweise herstellbar ist.

Vorteilhafterweise besteht ein Strömungsmengenregler bis zu 70 % oder 80 %, vorzugsweise mehr als 90 %, aus Kunststoff oder Kunststoff-Compound, um die vorliegenden Effekte und Vorteile zu erzielen bzw. zu verstärken.

Es sei auch daran gedacht, dass ein Strömungsmengenregler aus einer Vielzahl an unterschiedlichen technischen Kunststoffen hergestellt sein kann, um diese im Sinne der Erfindung vorteilhaft weiterzuentwickeln.

Auch diese Merkmale sind für sich betrachtet, also unabhängig von den übrigen Merkmalen der vorliegenden Erfindung, als erfinderisch anzusehen, da sie gattungsgemäße Strömungsmengenregler bereits für sich schon vorteilhaft weiterentwickeln können.

An dieser Stelle sei ausdrücklich daraufhingewiesen, dass die Aspekte der Erfindung alternativ oder kumulativ zum Einsatz kommen können, um die hierdurch erzielten Effekte und Vorteile auch gebündelt an einem einzigen Strömungsmengenregler verwirklichen zu können.

Weitere Merkmale, Effekte und Vorteile vorliegender Erfindung werden anhand anliegender Zeichnung und nachfolgender Beschreibung erläutert, in welchen beispielhaft ein Strömungsmengenregler und Bauteile hiervon dargestellt und beschrieben sind.

In der Zeichnung zeigen:
- Figur 1: schematisch eine längsgeschnittene Ansicht eines Strömungsmengenreglers umfassend zwei Stellventileinrichtungen, deren Gehäuse mittels eines Koppelteils thermisch voneinander entkoppelt sind;
- Figur 2: schematisch eine längsgeschnittene Teilansicht des in der Figur 1 gezeigten Strömungsmengenreglers hinsichtlich der Brauchwasserkreislauf seitigen, ersten Stellventileinrichtung einschließlich eines Betätigungselements zum gemeinsamen Betätigen von Steuerkolben des Strömungsmengenreglers;
- Figur 3: schematisch eine Ansicht der Koppelseite der Heizwasserkreislauf seitigen, weiteren Stellventileinrichtung des in der Figur 1 gezeigten Strömungsmengenreglers;
- Figur 4: schematisch eine längsgeschnittene Ansicht der in der Figur 3 gezeigten Heizwasserkreislauf seitigen, weiteren Stellventileinrichtung;
- Figur 5: schematisch eine Detailansicht der Koppelseite der in den Figuren 3 und 4 gezeigten Heizwasserkreislauf seitigen, weiteren Stellventileinrichtung entlang der in der Figur 3 gezeigten Schnittlinie A-A;
- Figur 6: schematisch eine längsgeschnittene Detailansicht des Koppelteils des insbesondere in den Figuren 1 und 2 gezeigten Strömungsmengenreglers;
- Figur 7: schematisch eine perspektivische Ansicht des insbesondere in der Figur 6 gezeigten Koppelteils;
- Figur 8: schematisch eine Ansicht des Betätigungselements zum Betätigen der Steuerkolben des insbesondere in der Figur 1 gezeigten Strömungsmengenreglers;
- Figur 9: schematisch eine perspektivische Ansicht des Heizungssteuerkolbens der Heizwasserkreislauf seitigen, weiteren Stellventileinrichtung des insbesondere in der Figur 1 gezeigten Strömungsmengenreglers;
- Figur 10: schematisch eine längsgeschnittene Ansicht des in der Figur 9 gezeigten Heizungssteuerkolbens;
- Figur 11: schematisch noch eine stirnseitige Ansicht des in den Figuren 9 und 10 gezeigten Heizungssteuerkolbens;
- Figur 12: schematisch eine perspektivische Ansicht des Brauchwassersteuerkolbens der ersten Stellventileinrichtung des insbesondere in der Figur 1 gezeigten Strömungsmengenreglers;
- Figur 13: schematisch eine längsgeschnittene Ansicht des in der Figur 12 gezeigten Sanitärsteuerkolbens;
- Figur 14: schematisch eine perspektivische Ansicht des insbesondere in der Figur 1 gezeigten Strömungsmengenreglers.

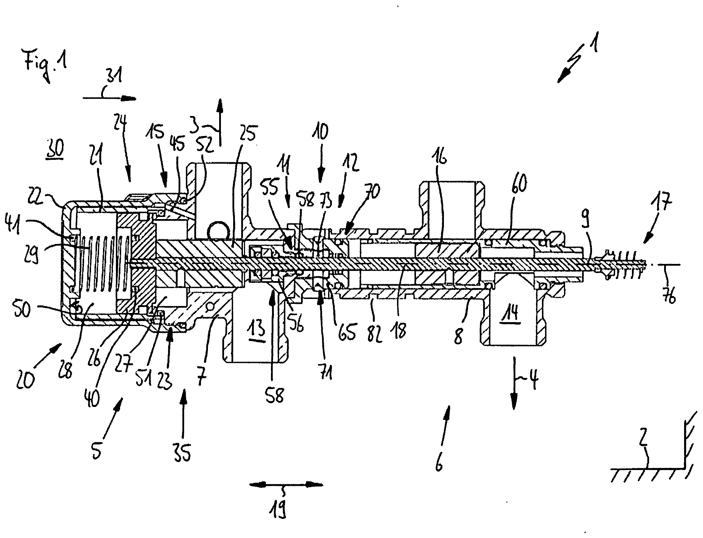

Der insbesondere in der Figur 1 gezeigte Strömungsmengenregler 1 ist Bestandteil einer hier nicht weiter gezeigten Heizung-Brauchwasser-Anlage 2, mit deren Hilfe in einem Gebäude (nicht gezeigt) an einer ebenfalls nicht dargestellten Zapfstelle angefordertes Brauchwasser unter Verwendung von Heizwasser einer Heizung erwärmt bzw. erhitzt wird.

Somit wird mittels des vorliegenden Strömungsmengenreglers 1 in Abhängigkeit von einer an der Zapfstelle angeforderten Menge an warmen Brauchwasser eine erforderliche Menge von Heizungswasser derart durch einen Wärmeübertrager der Heizung-Brauchwasser-Anlage 2 hindurch geleitet, dass hierbei das Brauchwasser durch das Heizungswasser erwärmt bzw. erhitzt werden kann. Solche Wärmeübertrager sind aus dem Stand der Technik gut bekannt. Insofern wird die Heizung-Brauchwasser-Anlage 2 diesbezüglich nicht weiter erläutert.

Im Allgemeinen dient der Strömungsmengenregler 1 also zum Steuern bzw. Regeln von Fluidvolumenströmen 3, nämlich von einem Brauchwasservolumenstrom 3 und einem Heizwasservolumenstrom 4, der Heizung-Brauchwasser-Anlage 2.

An dieser Stelle sei nochmals darauf hingewiesen, dass die Begrifflichkeiten "Steuern" und "Regeln" im Sinne vorliegender Erfindung synonym verwendet werden.

Der Strömungsmengenregler 1 zeichnet sich durch zwei Stellventileinrichtungen 5 und 6 aus, wobei die erste Stellventileinrichtung 5 in einem Brauchwasserkreislauf (hier nicht explizit gezeigt und beziffert) der Heizung-Brauchwasser-Anlage 2 integriert ist, durch welchen hindurch der Brauchwasservolumenstrom 3 fließt. Der Brauchwasserkreislauf ist hierbei offen, da an Zapfstellen Brauchwasser entnommen werden kann.

Ferner zeichnet sich der Strömungsmengenregler 1 durch die weitere Stellventileinrichtung 6 aus, welche dementsprechend in einem Heizwasserkreislauf (ebenfalls nicht dargestellt und explizit beziffert) der Heizung-Brauchwasser-Anlage 2 integriert ist, in welchem letztendlich der Heizungswasservolumenstrom 4 umgewälzt wird. Insofern ist der Heizwasserkreislauf geschlossen.

Damit ist die erste Stellventileinrichtung 5 der Sanitärseite (nicht beziffert) und die weitere Stellventileinrichtung 6 der Heizungsseite (nicht beziffert) der Heizung-Brauchwasser-Anlage 2 zugeordnet.

Die erste Stellventileinrichtung 5 weist ein erstes Gehäuse Teil 7 des Strömungsmengenreglers 1 und die weitere Stellventileinrichtung 6 ein weiteres Gehäuseteil 8 des Strömungsmengenreglers 1 auf, welche sich entlang der Mittellinie 9 des Strömungsmengenreglers 1 erstrecken.

Beide Gehäuseteile 7 und 8 sind in einem Gehäusekoppelbereich 10 miteinander verbunden, das bedeutet, die erste Stellventileinrichtung 5 besitzt eine Koppelseite 11, an welcher das weitere Gehäuse 8 der weiteren Stellventileinrichtung 6 befestigt ist. Im Umkehrschluss bedeutet dies, dass die weitere Stellventileinrichtung 6 eine Koppelseite 12 aufweist, an welcher das erste Gehäuseteil 7 der ersten Stellventileinrichtung 5 befestigt ist.

Insofern sind die beiden Stellventileinrichtungen 5 und 6 in dem Gehäusekoppelbereich 10 fest, aber lösbar miteinander zu dem Strömungsmengenregler 1 verbunden.

Ferner zeichnet sich der Strömungsmengenregler 1 hinsichtlich der ersten Stellventileinrichtung 5 durch einen Brauchwasserkanal 13 und hinsichtlich der weiteren Stellventileinrichtung 6 durch einen Heizwasserkanal 14 aus.

Der Brauchwasserkanal 13 kann mittels eines Brauchwassersteuerkolbens 15 verschlossen werden. Genauso verhält es sich bezüglich des Heizwasserkanals 14, welcher mit Hilfe eines Heizwassersteuerkolbens 16 verschließbar ist.

Der Brauchwassersteuerkolben 15 wird innerhalb der ersten Stellventileinrichtung 5 axial und somit quer zu dem Brauchwasserkanal 13 verlagert, um nun den Brauchwasservolumenstrom 3 zu steuern, welcher durch die erste Stellventileinrichtung 5 fließen kann.

Der Brauchwassersteuerkolben 15 stellt im Sinne der Erfindung ein Brauchwassermessglied (nicht explizit beziffert) dar.

Der Brauchwasserkolben 15 ist im Zusammenhang mit einem Strömungsmengenregler 1 einer Heizung-Brauchwasser-Anlage 2 oftmals auch als Sanitärsteuerkolben bezeichnet.

Dementsprechend umfasst die weitere Stellventileinrichtung 6 einen Heizwassersteuerkolben 16, oftmals auch Heizungssteuerkolben genannt, mittels welchem ein Heizungswasservolumenstrom 4 regelbar ist, welcher durch die weitere Stellventileinrichtung 6 fließen kann.

Der Heizwassersteuerkolben 16 ist ein Heizwassermessglied (nicht nochmals beziffert).

Der Brauchwassersteuerkolben 15 und der Heizwassersteuerkolben 16 sind mittels eines gemeinsamen Betätigungselements 17 zum gleichzeitigen Betätigen beider Steuerkolben 15 und 16 des Strömungsmengenreglers 1 miteinander wirkverbunden.

Das Betätigungselement 17 ist bevorzugt als starres Führungsstangenelement 18 ausgestaltet, wie in diesem konkreten Ausführungsbeispiel gezeigt.

Das Betätigungselement 17 ist, wie die Steuerkolben 15 und 16, in Längsrichtung 19 des Strömungsmengenreglers 1 bzw. der Stellventileinrichtungen 5 und 6 axial verlagerbar.

Die erste Stellventileinrichtung 5 umfasst einen Arbeitszylinder 20 mit einem zylindrischen Arbeitszylindergehäuse 21, welches mittels eines Deckelteils 22 an dem ersten Gehäuseteil 7 der ersten Stellventileinrichtung 5 angeordnet.

Das Deckelteil 22 ist auf einem Gewindeabsatz 23 des ersten Gehäuseteils 11 aufgeschraubt.

Der Arbeitszylinder 20 stellt an der ersten Stellventileinrichtung 5 einen Arbeitsraum 24 für den Brauchwassersteuerkolben 15 bereit, in welchem der Brauchwassersteuerkolben 15 zumindest teilweise angeordnet ist.

Der Arbeitsraum 24 wird hierbei von dem zylindrischen Arbeitszylindergehäuse 21, von dem Deckelteil 22 sowie von dem ersten Gehäuseteil 11 umgrenzt.

Der Brauchwassersteuerkolben 15 ist zumindest in diesem Ausführungsbeispiel einstückig ausgebildet, funktional ist er jedoch in ein axial verschiebliches Brauchwassersteuerelement 25 und in ein somit ebenfalls axial verschiebliches Trennelement 26 gegliedert, wobei das Trennelement 26 den Arbeitsraum 24 einerseits in einen Brauchwassersteuerelement-Aufnahmeraum 27 und andererseits in einen Rückstellelement-Aufnahmeraum 28 unterteilt, in welchem ein Rückstellelement 29 zum Halten des Brauchwassersteuerkolbens 15 untergebracht ist.

Es ist jedoch auch möglich, das Brauchwassersteuerelement 25 und das Trennelement 26 jeweils als einzelnes Bauteil herzustellen und anschließend zu dem Brauchwassersteuerkolben 15 zusammenzufügen.

Gegebenenfalls kann zwischen dem eigentlichen Brauchwassersteuerkolben 15 und dem daran befestigten Trennelement 26 auch eine Distanzbuchse (hier nicht gezeigt) angeordnet sein, um das Trennelement 26 gegebenenfalls beabstandet von dem Brauchwassersteuerelement 25 zu haltern.

Jedenfalls ist der Arbeitszylinder 20 derart aufgebaut, dass der Brauchwassersteuerelement-Aufnahmeraum 27 dem Gehäuseteil 11 der ersten Stellventileinrichtung 5 zugewandt ist, während der Rückstellelement-Aufnahmeraum 28 an einer diesem Gehäuseteil 11 abgewandten Seite 30 des Trennelements 26 bzw. des Brauchwassersteuerelements 25 angeordnet ist.

Das Rückstellelement 29 drückt mittels seiner Federkraft 31 speziell den Brauchwassersteuerkolben 15 axial nach rechts in seine Ruheposition 35, wobei sich das Rückstellelement 29 einerseits an dem Trennelement 26 und andererseits an dem Deckelteil 22 abstützt. In dieser Ruheposition 35 ist die erste Stellventileinrichtung 5 verschlossen.

Mit anderen Worten gesagt, das Rückstellelement 29 wird mittels des aufschraubbaren Deckelteils 22 gegenüber dem Trennelement 26 bzw. dem Brauchwassersteuerkolben 15 verspannt, und zwar derart, dass der Brauchwassersteuerkolben 15 in seiner Ruheposition 35 positioniert ist, solange an einer Zapfstelle kein warmes Brauchwasser angefordert wird und dementsprechend auch kein Brauchwasservolumenstrom 3 durch die erste Stellventileinrichtung 5 strömt.

Sobald jedoch aufgrund einer betätigten Zapfstelle Heizung-Brauchwasser-Anlage 2 Brauchwasser durch die erste Stellventileinrichtung 5 strömt, bewegt sich der Brauchwassersteuerkolben 15 entgegen der Federkraft 31 nach links in eine Steuerposition (nicht gezeigt) hinein, welche von der Ruheposition 35 verschieden ist.

Das Rückstellelement 29 ist innerhalb des Rückstellelement-Aufnahmeraums 28 definiert gehalten, da sowohl das Trennelement 26 als auch das Deckelteil 22 jeweils mit einer Halteringnut 40 bzw. 41 ausgestattet ist, in welchen das Rückstellelement 30 jeweils mit einem seiner Enden (hier nicht explizit beziffert) eingreift und fixiert ist.

Der Arbeitsraum 24, insbesondere der Rückstellelement-Aufnahmeraum 28, ist mit dem Brauchwasserkanal 13 mittels eines Brauchwasserleitungsabschnitts 45 fluidisch verbunden.

Sobald nun Brauchwasser an einer Zapfstelle angefordert wird und hierdurch ein Brauchwasservolumenstrom 3 initiiert wird, führt dies zu einem Druckabfall in dem Rückstellelement-Aufnahmeraum 28, wodurch der gesamte Brauchwassersteuerkolben 15 mitsamt dem Trennelement 26 entgegen der Federkraft 31 verlagert wird, wobei die nach links Verlagerung so lange anhält, bis das Trennelement 26 gegen die innere Kopfseite 50 des Deckelteils 22 anstößt.

In dieser maximalen Steuerposition des Brauchwassersteuerkolbens 15 ist dann nicht nur der Brauchwasserkanal 13 maximal weit geöffnet, sondern auch der Heizwasserkanal 14, da der Heizwassersteuerkolben 16 und der Brauchwassersteuerkolben 15 mittels des Betätigungselements mechanisch verbunden sind, so dass der Heizwassersteuerkolben 16 stets mit dem Brauchwasserkolben 15 mitgeschleppt wird.

Das zylindrische Arbeitszylindergehäuse 21 und das Deckelteil 22 sind gegenüber dem ersten Gehäuseteil 11 jeweils mittels einer O-Ring-Dichtung 51 bzw. 52 abgedichtet.

Ferner ist das erste Gehäuseteil 11 an einer Betätigungselementdurchführung 55 mittels einer Stopfbuchse 56 abgedichtet, wobei die Stopfbuchse 56 gegenüber dem Betätigungselement 17 einerseits und dem ersten Gehäuseteil 11 andererseits mittels O-Ring-Dichtungen 57 (hier nur insgesamt beziffert) aufweisenden Dichtungseinrichtungen 58 abgedichtet ist.

Mittels dieser Dichtungseinrichtungen 58 ist die erste Stellventileinrichtung 5 brauchwasserseitig auch gegenüber der weiteren Stellventileinrichtung 6 fluidisch abgedichtet.

Die weitere Stellventileinrichtung 6 umfasst eine Innenhülse 60, in welcher der Heizungswassersteuerkolben 16 gleitet.

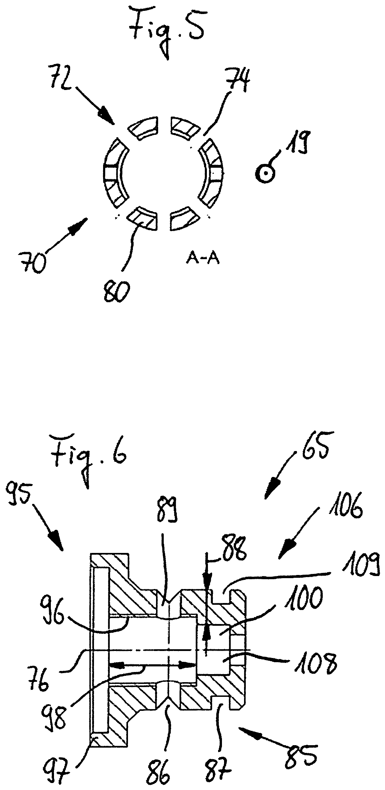

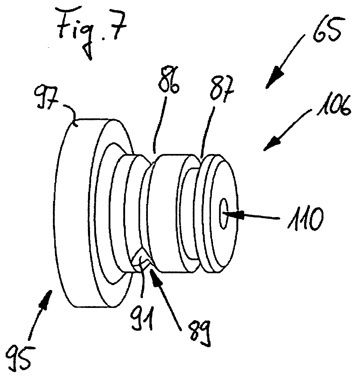

Um die beiden Stellventileinrichtungen 5 und 6 nun thermisch besonders gut voneinander zu entkoppeln, um hierdurch eine Wärmeübertragung zwischen den beiden Gehäuseteilen 11 und 12 zumindest reduzieren können, weist der Strömungsmengenregler 1 ein Koppelteil 65 auf, dessen thermische Leitfähigkeit geringer ist als die der Gehäuseteile 11 und 12 (vgl. auch Figuren 6 und 7).

Das Koppelteil 65 ist in dem Gehäusekoppelbereich 10 vorgesehen, wobei das erste Gehäuseteil 11 und das weitere Gehäuseteil 12 durch das Koppelteil 65 fest, aber lösbar miteinander verbunden sind.

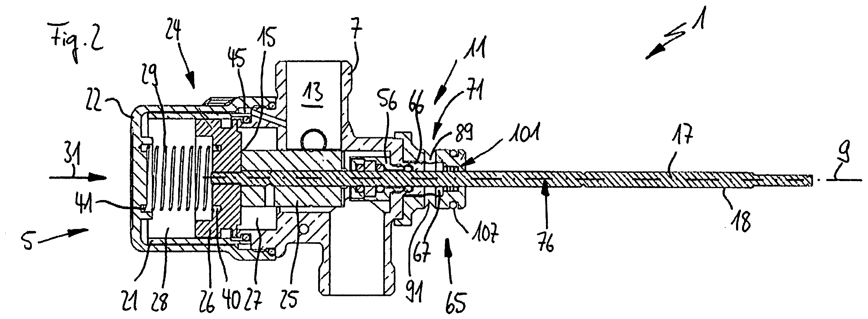

Das Koppelteil 65 ist an der Koppelseite 11 des ersten Gehäuseteils 7 auf ein Außengewinde 66 eines an dem ersten Gehäuseteil 7 ausgeprägten Aufnahmezapfens 67 geschraubt, wie gemäß der Darstellung nach der Figur 2 deutlicher zu erkennen ist.

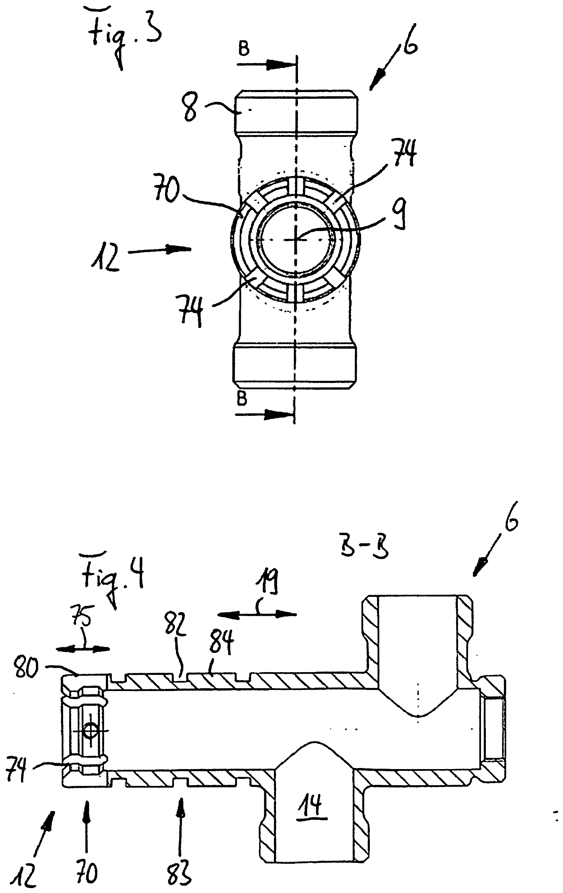

Wie weiter gemäß den Darstellungen nach den Figuren 3 bis 5 deutlich erkennbar ist, weist die weitere Stellventileinrichtung 6 an der Koppelseite 12 des weiteren Gehäuseteils 8 eine Aufnahmebuchse 70, in welcher das Koppelteil 65 eingesteckt ist.

Sowohl der Aufnahmezapfen 67 an der Koppelseite 11 des ersten Gehäuseteils 7 als auch die Aufnahmebuchse 70 an der Koppelseite 12 des weiteren Gehäuseteils 8 weisen erste Materialaussparungen 71 bzw. 72 auf, um die Größe an Wärmeenergie übertragenen Kontaktflächen (hier nicht explizit beziffert) an den Gehäuseteilen 7 und 8 zu reduzieren.

Bereits durch solche Materialaussparungen 71, 72 sind die beiden Stellventileinrichtungen 5 und 6 thermisch voneinander besser entkoppelt.

Die ersten Materialaussparungen 71 an der Koppelseite 11 sind hierbei durch einfache Bohrlöcher 73 formuliert, während die ersten Materialaussparungen 72 an der Koppelseite 12 Längsnuten 74 realisieren.

Hierbei erstrecken sich Längsnuten 74 jeweils mit ihrer Längserstreckung 75 axial in Längsrichtung 19 des Strömungsmengenreglers 1 und die Längsnuten 74 sind konzentrisch um die Verlagerungsachse 76 angeordnet, entlang welcher sich das Betätigungselement 17 und die Steuerkolben 15 und 16 an dem Strömungsmengenregler 1 axial verlagern.

Durch das Vorhandensein der Längsnuten 74 bilden sich an der Aufnahmebuchse 70 sich in Längserstreckung 75 erstreckende Zungenelement 80 aus, so dass eine Wärmeübertragung von dem weiteren Gehäuseteil 8 der weiteren Stellventileinrichtung 6 auf das erste Gehäuseteil 7 der ersten Stellventileinrichtung 5 im Wesentlichen lediglich über diese Zungenelemente 80 erfolgen kann.

Die Bohrlöcher 73 erstrecken sich quer zu dieser Längsrichtung 19. Auch durch diese Bohrlöcher 73 reduziert sich die Möglichkeit einer Wärmeübertragung.

Während die Koppelseite 11 des ersten Gehäuseteils 7 in das Koppelteil 65 eingeschraubt ist, ist die Koppelseite 12 des weiteren Gehäuseteils 8 lediglich außen auf das Koppelteil 65 aufgesteckt (vgl. Figur 1), wobei die Schraub- und Steckverbindungen mittels einer oder mehrerer Sicherungsschrauben (hier nicht dargestellt) gesichert werden können.

Wie gemäß der Darstellung nach Figur 4 noch gut zu erkennen ist, sind an dem weiteren Gehäuseteil 8 zwischen der Aufnahmebuchse 70 und dem Heizwasserkanal 14 noch umlaufende Nuten 82 (hier nur exemplarisch beziffert) angeordnet, die einerseits weitere querschnittsreduzierte Bereiche 83 an dem weiteren Gehäuseteil 12 ausgestalten. Andererseits bedingen diese in das weitere Gehäuseteil 12 eingelassene umlaufende Nuten 82 sogleich auch Kühlrippenbereiche bzw. Kühlrippenelemente 84 an diesem weiteren Gehäuseteil 8, wodurch die Gefahr einer unerwünschten, von der weiteren Stellventileinrichtung 6 ausgehenden Wärmeübertragung reduziert ist.

Es versteht sich, dass mittels der vorbeschriebenen ersten Materialaussparungen 71, 72 und den hierdurch bedingten Bohrlöchern 73 bzw. den hierdurch bedingten Zungenelementen 80, sowie den umlaufenden Nuten 82 und den hieraus resultierenden weiteren querschnittsreduzierenden Bereichen 83 bzw. Kühlrippenbereiche bzw. Kühlrippenelemente 84 bereits eine gute thermische Entkopplung zwischen den beiden Stellventileinrichtungen 5 und 6 erzielbar ist.

Eine Wärmeübertragung zwischen den beiden Stellventileinrichtungen 5, 6 kann jedoch signifikant weiter reduziert werden, wenn zwischen den beiden Gehäuseteilen 7 und 8 das zuvor bereits erwähnte und in den Figuren 6 und 7 nochmals genauer gezeigte Koppelteil 65 angeordnet ist.

Hierfür ist das Koppelteil 65 in diesem Ausführungsbeispiel aus dem Kunststoffmaterial Polyoxymethylen (POM) hergestellt und es weist insofern eine Wärmeleitfähigkeit α ≤ 0,5 W/(m • K) auf.

Besonders vorteilhaft ist es, wenn das Koppelteil 65 ebenfalls querschnittsreduzierte Bereiche 85 aufweist, um eine Wärmeübertragung zwischen den Gehäuseteilen 11 und 1 zu reduzieren, wie insbesondere gemäß der Darstellungen nach den Figuren 6 und 7 gut zu erkennen ist.

Die querschnittsreduzierten Bereiche 85 können nahezu beliebig ausgestaltet sein, wobei sie vorliegend an dem Koppelteil 65 konstruktiv einfach durch Umfangsnuten 86 und 87 realisiert sind, welche den Wandlungsquerschnitt 88 des Koppelteils 65 reduzieren.

An der ersten Umfangsnut 86 sind darüber hinaus quer verlaufende Durchgangsbohrungen 89 vorgesehen, welche bei ordnungsgemäßer Montage der Komponenten "erste Stellventileinrichtung 5, weitere Stellventileinrichtung 6 und Koppelteil 65" in Überdeckung mit den Materialaussparungen 71 und 72 an dem Aufnahmezapfen 67 und der Aufnahmebuchse 70 gebracht werden können, um die vorgenannten Komponenten 5, 6 und 65 mittels eines Sicherungselements (nicht gezeigt), wie einer Schraube, eines Splintes oder dergleichen, gegen unbeabsichtigtes Verdrehen zu sichern.

Zumindest eine der quer verlaufenden Durchgangsbohrungen 89 ist eine Leckagebohrung 91, durch welche bei auftretenden Undichtigkeiten hindurch insbesondere Heizwasser aus dem Strömungsmengenregler 1 nach außen abgeführt werden kann, um die Gefahr zu verringern, dass Heizwasser in den Brauchwasserkreislauf gelangt.

Das Koppelteil 65 verfügt darüber hinaus an seiner ersten Anschlussseite 95 über ein Innengewinde 96, mittels welchem das Koppelteil 65 auf das Außengewinde 66 des Aufnahmezapfens 67 aufgeschraubt werden kann, so dass das Koppelteil 65 fest, aber lösbar an der ersten Stellventileinrichtung 5 befestigbar ist (vgl. insbesondere Figur 2).

Radial weiter außen des Innengewindes 96 weist das Koppelteil 65 an der ersten Anschlussseite 95 noch einen umlaufenden Kragen 97. Dieser umlaufende Kragen 97 umgreift das erste Gehäuseteil 7 der ersten Stellventileinrichtung 5 an dessen Koppelseite 11 zumindest teilweise, wenn das Koppelteil 65 insbesondere vollständig auf den Aufnahmezapfen 67 aufgeschraubt ist.

Hierbei weist das Innengewinde 96 in Axialrichtung 97 des Koppelteils 65 eine Tiefe 98 auf, so dass die Durchgangs- bzw. Leckagebohrungen 89 bzw. 91 zumindest teilweise in Überdeckung mit den Längsnuten 74 gebracht werden können, wenn das Koppelteil 65 ordnungsgemäß auf dem Aufnahmezapfen 67 der ersten Stellventileinrichtung 5 aufgeschraubt ist.

Axial neben dem Innengewinde 96 des Koppelteils 65 ist noch ein Bauteilraum 100 zum Aufnehmen eines Dichtungselements 101 vorgesehen, welches in diesem Ausführungsbeispiel als X-Ring-Dichtungselement mit Stützring, Quad-Ring-Dichtungselement oder dergleichen (nicht explizit beziffert) ausgeführt ist.

Mittels eines derartigen X-Ring-Dichtungselementes geling einerseits gegenüber dem Betätigungselement 17 in Axialrichtung 97 eine Doppelabdichtungsebene und andererseits eine gute Abstützung des Betätigungselements 17, so dass insbesondere ein Verkanten des Betätigungselements 17 gegenüber dem Dichtungselement 101 nahezu ausgeschlossen ist.

Ferner befindet sich an dem Koppelteil 65, genauer gesagt, in einem Bereich einer zweiten Anschlussseite 106 des Koppelteils 65 die zweite Umfangsnut 87, welche für die Aufnahme eines weiteren Dichtungselements 107 (vgl. insbesondere Figuren 1 und 2) in Gestalt eines O-Ring-Dichtungselements (hier nicht explizit beziffert) herangezogen wird.

Somit erfüllt die zweite Umfangsnut 87 eine Doppelfunktion, nämlich erstens die thermische Entkoppelung und zweitens bei entsprechender Ausgestaltung der Umfangsnut 87 eine Dichtungsaufnahme.

Insofern ist das Koppelteil 65 mit zwei Dichtungssitzen 108, 109 ausgestattet, nämlich einerseits mit einem inneren, ersten Dichtungssitz 108 für das X-Ring-Dichtungselement 102 mit Stützring und andererseits mit einem äußeren, zweiten Dichtungssitz 109 für das O-Ring-Dichtungselement (nicht beziffert).

Mittig weist das Koppelteil 65 eine Durchführungsöffnung 110 zum Durchführen des Betätigungselements 17 auf.

Vorliegend kann gesagt werden, dass mit der Ausgestaltung der ersten Anschlussseite 95 eine erste Aufnahme zum Aufnehmen des ersten Gehäuseteils 7 der ersten Stellventileinrichtung 5 und mit der Ausgestaltung der zweiten Anschlussseite 106 eine weitere Aufnahme zum Aufnehmen des weiteren Gehäuseteils 8 der weiteren Stellventileinrichtung 6 verwirklicht sind.

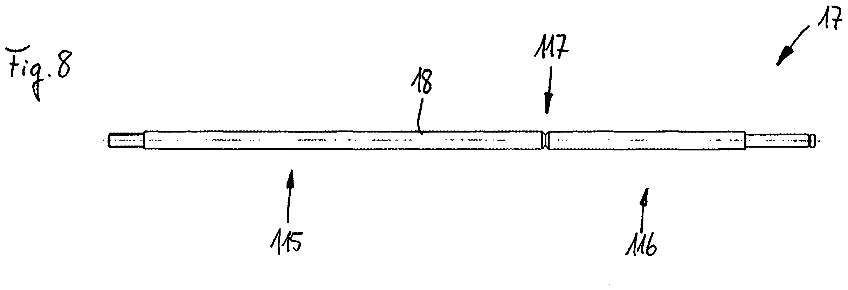

Gemäß der Darstellung nach der Figur 8 ist das Betätigungselement 17 des vorliegenden Strömungsmengenreglers 1 gezeigt, wobei das Betätigungselement 17 als längliches Bauteil (hier nicht nochmals explizit beziffert) in Gestalt eines Führungsstangenelements 18 ausgeführt ist.

In diesem gezeigten Ausführungsbeispiel ist das Betätigungselement 17 aus einem Keramikmaterial hergestellt.

Das Betätigungselement 17 zeichnet sich durch einen eher der ersten Stellventileinrichtung 5 zugeordneten, ersten Abschnitt 115 und durch einen eher der weiteren Stellventileinrichtung 6 zugeordneten, zweiten Abschnitt 116 aus, wobei diese beiden Abschnitte durch die Wahl des Keramikmaterials thermisch voneinander getrennt sind, so dass insbesondere von dem der weiteren Stellventileinrichtung 6 zugeordneten, zweiten Abschnitt 116 kaum bzw. nur eingeschränkt Wärmeenergie zu der ersten Stellventileinrichtung 5 zugeordneten, ersten Abschnitt 115 gelangen kann.

Das Betätigungselement 17 weist noch einen Einstich 117 auf, welcher sich in etwa auf einer 1/3-2/3 der Länge des Betätigungselements 17 befindet.

Der Einstich 117 bewirkt eine Querschnittsreduzierung an dem Betätigungselement 17, so dass dort der Wärmeübergang zwischen den beiden Abschnitten 115 und 116 signifikant gehemmt ist.

Insofern kann die Querschnittsreduzierung am Einstich 117 neben dem Keramikmaterial, aus welchem das Betätigungselement 17 hergestellt ist, eine sehr gute thermische Entkopplung hinsichtlich der brauchwasserkreislaufseitigen, ersten Stellventileinrichtung 5 und der heizwasserkreislaufseitigen, weiteren Stellventileinrichtung 6 dar.

Der Einstich 117 dient aber auch einer Schraubmittelfixierung und damit der Festlegung des Heizwasserkolbens 16 an dem Betätigungselement 17.

Es versteht sich, dass an dem Betätigungselement 17 noch weitere Materialaussparungen vorgesehen sein können, um mehrere querschnittsreduzierte Bereiche an dem Betätigungselement 17 zu verwirklichen, um somit eine noch bessere thermische Entkopplung zu erzielen.

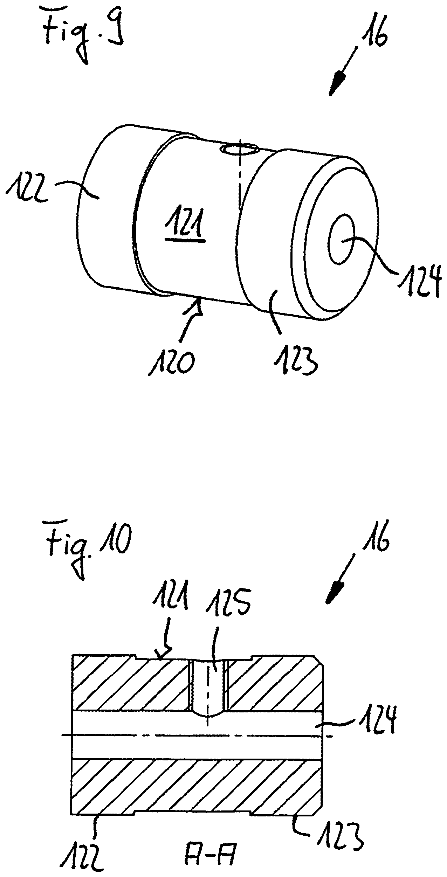

Gemäß den Darstellungen nach den Figuren 9 bis 11 ist auch der Heizwassersteuerkolben 16 nochmals detaillierter gezeigt, wobei der Heizwassersteuerkolben 16 aus einem Kunststoffmaterial hergestellt ist, um eine bessere thermische Isolierung bzw. Trennung gegenüber dem Betätigungselement 17 und insbesondere gegenüber der ersten Stellventileinrichtung 5 zu erzielen.

In dem vorliegenden Ausfiihrungsbeispiel ist der Heizwassersteuerkolben 16 aus Polytetrafluorethylen (PTFE) hergestellt, wodurch ein Wärmeübergang von der weiteren Stellventileinrichtung 6 zu der ersten Stellventileinrichtung 5 insgesamt reduziert wird.

Der Heizwassersteuerkolben 16 weist an seiner Außenseite 120 durch eine Senke 121 voneinander beabstandete Gleitflächen 122 und 123 auf, mittels welchem der Heizwassersteuerkolben 16 entlang der Innenhülse 60 der weiteren Stellventileinrichtung 6 gleitet, um den Heizungswasservolumenstrom 4 an der weiteren Stellventileinrichtung 6 zu steuern.

Innerhalb der Senke 121 besitzt der Heizwassersteuerkolben 16 eine quer zu einer Durchführungsöffnung 124 verlaufende Gewindebohrung 125. In diese querverlaufende Gewindebohrung 125 kann eine hier nicht gezeigte Sicherungsschraube eingedreht werden, um den Heizwassersteuerkolben 16 in dem Bereich des Einstichs 117 des Betätigungselements 17 zu fixieren.

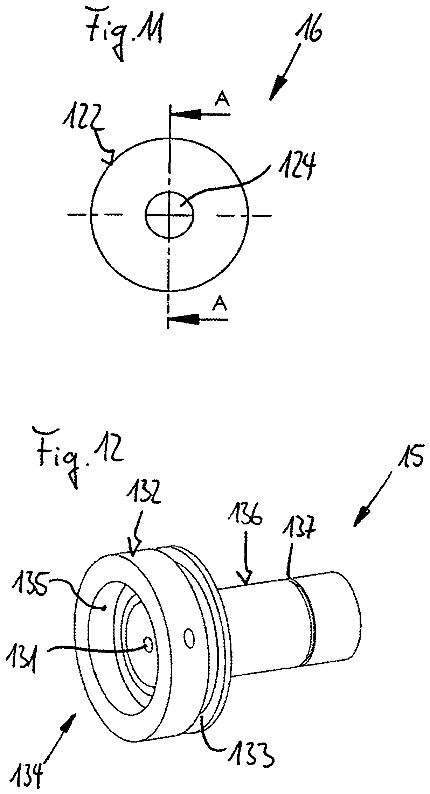

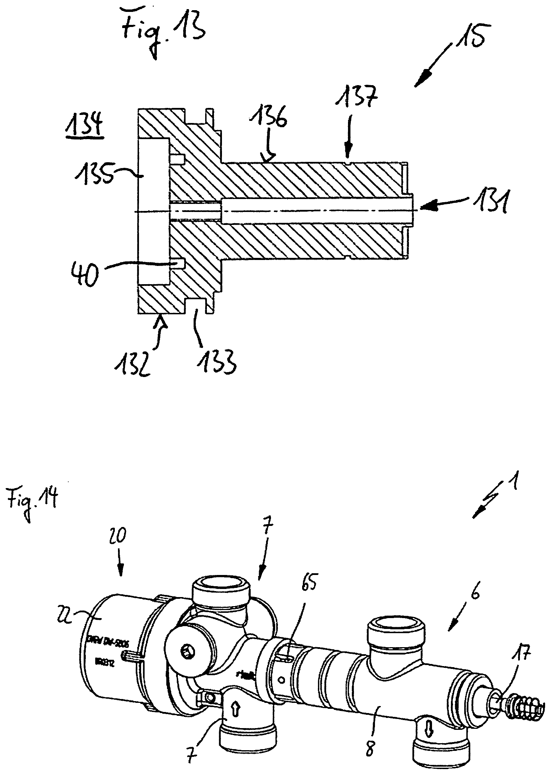

Gemäß der Darstellungen nach den Figuren 12 und 13 ist auch der Brauchwassersteuerkolben 15 des vorliegenden Strömungsmengenreglers 1 nochmals dargestellt, wobei auch dieser Brauchwassersteuerkolben 15 aus einem Kunststoffmaterial hergestellt ist, nämlich wie in diesem Ausführungsbeispiel erfolgt aus Polyoxymethylen (POM). Hierdurch kann eine gute thermische Isolierung bzw. Trennung erzielt werden.

Der Brauchwassersteuerkolben 15 ist einstückig, aber zweifunktional ausgebildet, wobei der Brauchwassersteuerkolben 15 im Wesentlichen zwischen dem Brauchwassersteuerelement 25 und dem bereits weiter vorstehend beschriebenen Trennelement 26 funktional unterteilt ist.

Mittels des Brauchwassersteuerelements 25 wird der durch den Brauchwasserkanal 46 durchströmbare Brauchwasservolumenstrom 3 gesteuert bzw. geregelt, während mittels des Trennelements 26 der Arbeitsraum 25 des Arbeitszylinders 20 der ersten Stellventileinrichtung 5 in dem Brauchwassersteuerelement-Aufnahmeraum 27 und in dem Rückstellelement-Aufnahmeraum 28 unterteilt ist, wie vorstehend bereits ausführlich beschrieben.

Der Brauchwassersteuerkolben 15 weist ebenfalls eine Durchführungsöffnung 131 auf, in welche das Betätigungselement 17 eingesteckt und so mit dem Brauchwassersteuerkolben 15 wirkverbunden werden kann.

Das Trennelement 26 des Brauchwassersteuerkolbens 15 weist an seinem Umfang 132 eine Funktionsumfangsnut 133 des auf.

An der dem Brauchwassersteuerelement 25 abgewandten Seite 134 des Trennelements 26 ist zudem noch ein Aussparung 135 vorhanden, in welche das komprimierte Rückstellelement 29 zumindest teilweise untergebracht werden kann, wenn sich der Brauchwassersteuerkolben 15 in einer Steuerposition der ersten Stellventileinrichtung 5 und insbesondere in seiner maximalen Auslenkung nach links hin befindet, in welcher der Brauwasserkanal 13 dann vollständig geöffnet ist.

Das Brauchwassersteuerelement 25 des Brauchwassersteuerkolbens 15 weist an seinem kleineren Umfang 136 noch eine weitere Funktionsumfangsnut 137 auf.

Gemäß der Darstellung nach der Figur 14 ist der vorstehend beschriebene Strömungsmengenregler 1 nochmals in einer perspektivischen Ansicht dargestellt, wobei das erste Gehäuseteil 7 der ersten Stellventileinrichtung 5 mittels des Koppelteils 65 (nahezu vollständig verdeckt) mit dem weiteren Gehäuseteil 8 der weiteren Stellventileinrichtung 6 fest, aber lösbar sowie thermisch entkoppelt miteinander verbunden sind.

Das erste Gehäuseteil 7 gehört der ersten Stellventileinrichtung 5 an, mittels welcher der Brauchwasservolumenstrom 3 gesteuert bzw. geregelt wird.

Links am Strömungsmengenregler 1 ist gut das Deckelteil 22 des Arbeitszylinders 20 der ersten Stellventileinrichtung 5 zu erkennen.

Rechts an dem Strömungsmengenregler 1 im Bereich der weiteren Stellventileinrichtung 6 ist noch ein Ende des Betätigungselement 17 erkennbar, welches rechts aus dem Strömungsmengenregler 1 bzw. aus der weiteren Stellventileinrichtung 6 hinausragt.

An dieser Stelle sei nochmals explizit darauf hingewiesen, dass die Merkmale der vorstehend bzw. in den Ansprüchen und/oder Figuren beschriebenen Lösungen gegebenenfalls auch kombiniert werden können, um Merkmale, Effekte und Vorteile der Erfindung entsprechend kumuliert umsetzen bzw. erzielen zu können.

Es versteht sich, dass es sich bei dem in der Zeichnung gezeigten Ausführungsbeispiel lediglich um eine erste Ausgestaltung des erfindungsgemäßen Strömungsmengenreglers bzw. dessen Bauteile handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Strömungsmengenregler
- 2: Heizung-Brauchwasser-Anlage
- 3: Brauchwasservolumenstrom
- 4: Heizwasservolumenstrom
- 5: erste Stellventileinrichtung
- 6: weitere Stellventileinrichtung
- 7: erstes Gehäuseteil
- 8: weiteres Gehäuseteil
- 9: Mittellinie
- 10: Gehäusekoppelbereich
- 11: Koppelseite des ersten Gehäuseteils
- 12: Koppelseite des weiteren Gehäuseteils
- 13: Brauchwasserkanal
- 14: Heizwasserkanal
- 15: Brauchwassersteuerkolben bzw. Sanitärsteuerkolben
- 16: Heizwassersteuerkolben bzw. Heizungssteuerkolben
- 17: gemeinsames Betätigungselement
- 18: Führungsstangenelement
- 19: Längsrichtung
- 20: Arbeitszylinder
- 21: zylindrisches Arbeitszylindergehäuse
- 22: Deckelteil
- 23: Gewindeabsatz
- 24: Arbeitsraum
- 25: Brauchwassersteuerelement
- 26: Trennelement
- 27: Brauchwassersteuerelement-Aufnahmeraum
- 28: Rückstellelement-Aufnahmeraum
- 29: Rückstellelement
- 30: abgewandte Seite
- 31: Federkraft
- 35: Ruheposition
- 40: erste Halteringnut
- 41: weitere Halteringnut
- 50: innere Kopfseite
- 51: innere O-Ring-Dichtung
- 52: äußere O-Ring-Dichtung
- 55: Betätigungselementdurchführung
- 56: Stopfbuchse
- 57: O-Ring-Dichtungen
- 58: Dichtungseinrichtungen
- 60: Innenhülse
- 65: Koppelteil
- 66: Außengewinde
- 67: Aufnahmezapfen
- 70: Aufnahmebuchse
- 71: erste Materialaussparungen
- 72: erste Materialaussparungen
- 73: Bohrlöcher
- 74: Längsnuten
- 75: Längserstreckung
- 76: Verlagerungsachse
- 80: Zungenelement
- 82: umlaufende Nuten
- 83: weitere querschnittsreduzierte Bereiche
- 84: Kühlrippenelemente
- 85: querschnittsreduzierte Bereiche
- 86: erste Umfangsnut
- 87: zweite Umfangsnut
- 88: Wandungsquerschnitt
- 89: Durchgangsbohrungen
- 91: Leckagebohrungen
- 95: erste Anschlussseite
- 96: Innengewinde
- 97: Axialrichtung
- 99: umlaufender Kragen
- 98: Tiefe
- 100: Baueilraum
- 101: Dichtungselement
- 102: X-Ring-Dichtungselement mit Stützring
- 106: zweite Anschlussseite
- 107: weiteres Dichtungselement
- 108: erster Dichtungssitz
- 109: zweiter Dichtungssitz
- 110: Durchführungsöffnung
- 115: erster Abschnitt
- 116: zweiter Abschnitt
- 117: Einstich
- 120: Außenseite
- 121: Senke
- 122: erste Gleitfläche
- 123: weitere Gleitfläche
- 124: Durchführungsöffnung
- 125: querverlaufende Gewindebohrung
- 131: Durchführungsöffnung
- 132: Umfang
- 133: Funktionsumfangsnut
- 134: abgewandte Seite
- 135: Aussparung
- 136: kleinerer Umfang
- 137: weitere Funktionsumfangnut

## Patentansprüche

1. Strömungsmengenregler (1) zum Regeln von Fluidvolumenströmen (3,4) einer Heizung-Brauchwasser-Anlage (2) umfassend eine Brauchwasserkreislauf seitige, erste Stellventileinrichtung (5) mit einem ersten Gehäuseteil (7) des und umfassend eine Heizwasserkreislauf seitige, weitere Stellventileinrichtung (6) mit einem weiteren Gehäuseteil (8) des Strömungsmengenreglers (1), bei welchem die erste Stellventileinrichtung (5) und die weitere Stellventileinrichtung (6) mittels eines Betätigungselements (17) zum Betätigen von Steuerkolben (15, 16) des Strömungsmengenreglers (1) miteinander wirkverbunden sind, wobei das erste Gehäuseteil (7) und das weitere Gehäuseteil (8) durch ein Koppelteil (65) fest, aber lösbar miteinander verbunden sind, **dadurch gekennzeichnet, dass** das Koppelteil (65) zumindest teilweise aus einem Material mit einer thermisch geringeren Leitfähigkeit als eines der Gehäuseteile (7, 8) hergestellt ist und bevorzugt das Betätigungselement (17) konzentrisch umgibt, wodurch die beiden Stellventileinrichtungen (5, 6) derart thermisch voneinander entkoppelt sind, dass ein Wärmeübergang zwischen den beiden Gehäuseteilen (7, 8) der Stellventileinrichtungen (5, 6) unterbunden oder zumindest signifikant reduziert ist, so dass ein unerwünschtes Erwärmen von Brauchwasser an dem Strömungsmengenregler (1) vermieden wird.

2. Strömungsmengenregler (1) zum Regeln von Fluidvolumenströmen einer Heizung-Brauchwasser-Anlage (2) umfassend eine Brauchwasserkreislauf seitige, erste Stellventileinrichtung (5) mit einem ersten Gehäuseteil (7) des Strömungsmengenreglers (1) und umfassend eine Heizwasserkreislauf seitige, weitere Stellventileinrichtung (6) mit einem weiteren Gehäuseteil (8) des Strömungsmengenreglers (1), bei welchem die erste Stellventileinrichtung (5) und die weitere Stellventileinrichtung (6) zum einen in einem Gehäusekoppelbereich (10) und zum anderen mittels eines Betätigungselements (17) zum Betätigen von Steuerkolben (15, 16) des Strömungsmengenreglers (1) miteinander wirkverbunden sind, wobei das erste Gehäuseteil (7) und das weitere Gehäuseteil (8) durch ein Koppelteil (65) fest, aber lösbar miteinander verbunden sind, **dadurch gekennzeichnet, dass** das Koppelteil (65) zumindest teilweise aus einem Material mit einer thermisch geringeren Leitfähigkeit als eines der Gehäuseteile (7, 8) hergestellt ist und bevorzugt das Betätigungselement (17) konzentrisch umgibt, wodurch zumindest eines der Gehäuseteile (7, 8) in dem Gehäusekoppelbereich (10) derart ausgestaltet ist, dass eine Wärmeübertragung auf das andere der Gehäuseteile (7, 8) unterbunden oder zumindest signifikant reduziert ist, so dass ein unerwünschtes Erwärmen von Brauchwasser an dem Strömungsmengenregler (1) vermieden wird.

3. Strömungsmengenregler (1) zum Regeln von Fluidvolumenströmen einer Heizung-Brauchwasser-Anlage (2) umfassend eine Brauchwasserkreislauf seitige, erste Stellventileinrichtung (5) mit einem ersten Gehäuseteil (7) des Strömungsmengenreglers (1) und umfassend eine Heizwasserkreislauf seitige, weitere Stellventileinrichtung (6) mit einem weiteren Gehäuseteil (8) des Strömungsmengenreglers (1), bei welchem die erste Stellventileinrichtung (5) und die weitere Stellventileinrichtung (6) mittels eines Betätigungselements (17) miteinander wirkverbunden sind, wobei das erste Gehäuseteil (7) und das zweite Gehäuseteil (8) durch ein Koppelteil (65) körperlich voneinander getrennt sind, **dadurch gekennzeichnet, dass** dem Koppelteil (65) eine Wärmleitfähigkeit α ≤ 10 W/(m • K), vorzugsweise eine Wärmleitfähigkeit α ≤ 1,0 W/(m • K), innewohnt, so dass ein Wärmeübergang zwischen den beiden Gehäuseteilen (7, 8) der Stellventileinrichtungen (5, 6) unterbunden oder zumindest signifikant reduziert ist, um ein unerwünschtes Erwärmen von Brauchwasser an dem Strömungsmengenregler (1) zu vermeiden.

4. Strömungsmengenregler (1) nach Anspruch 1,2 oder 3, ***dadurch gekennzeichnet, dass*** das Koppelteil (65) aus einem Kunststoffmaterial oder einem Compound hieraus, insbesondere aus Polyoxymethylen (POM), hergestellt ist.

5. Strömungsmengenregler (1) nach einem der Ansprüche 1, 2 oder 3, ***dadurch gekennzeichnet, dass*** das Koppelteil (65) wenigstens einen querschnittsreduzierten Bereich (85) aufweist, um eine Wärmeübertragung zwischen den Gehäuseteilen (7, 8) zu reduzieren.

6. Strömungsmengenregler nach einem der Ansprüche 3 bis 5, ***dadurch gekennzeichnet, dass*** das Koppelteil (65) wenigstens einen Dichtungssitz (108, 109) für Dichtungselemente (101, 107) aufweist.

7. Strömungsmengenregler (1) nach einem der Ansprüche 1 bis 6, ***dadurch gekennzeichnet, dass*** zumindest eines der Gehäuseteile (7, 8), vorzugsweise das weitere Gehäuseteil (8), Kühlrippenelemente (84) aufweist, um eine Wärmeübertragung zwischen den Gehäuseteilen (7, 8) zu reduzieren.

8. Strömungsmengenregler (1) nach einem der Ansprüche 1 bis 7, ***dadurch gekennzeichnet, dass*** wenigstens eines der Gehäuseteile (7, 8) einen Aufnahmezapfen (67) oder eine Aufnahmebuchse (70) umfasst, wobei der Aufnahmezapfen (67) und/oder die Aufnahmebuchse (70) Materialaussparungen (71, 72) aufweist, um wärmeenergieübertragene Kontaktflächen zwischen den Gehäuseteilen (7, 8) zu reduzieren.

9. Strömungsmengenregler (1) nach einem der Ansprüche 1 bis 7, ***dadurch gekennzeichnet, dass*** wenigstens eines der Gehäuseteile (7, 8) einen Aufnahmezapfen (67) oder eine Aufnahmebuchse (70) umfasst, an welchem ein Koppelteil (65) zum Verbinden des ersten Gehäuseteils (7) und des weiteren Gehäuseteils (8) anordenbar ist, wobei der Aufnahmezapfen (67) und/oder die Aufnahmebuchse (70) Materialaussparungen (71, 72) aufweist, um wärmeenergieübertragene Kontaktflächen zwischen den Gehäuseteilen (7, 8) und dem Koppelteil (65) zu reduzieren.

10. Strömungsmengenregler (1) nach Anspruch 8 oder 9, ***dadurch gekennzeichnet, dass*** Materialaussparungen (72) an der Aufnahmebuchse (70) und/oder dem Aufnahmezapfen (67) sich mit Ihrer jeweiligen Längserstreckung (75) in Längsrichtung (19) des Betätigungselements (17) erstrecken.

11. Strömungsmengenregler (1) nach einem der Ansprüche 1 bis 10, ***dadurch gekennzeichnet, dass*** die Brauchwasserkreislauf seitige, erste Stellventileinrichtung (5) ein Brauchwassersteuerkolben (15) aus einem Kunststoffmaterial, insbesondere aus Polyoxymethylen (POM), aufweist.

12. Strömungsmengenregler (1) nach einem der Ansprüche 1 bis 11, ***dadurch gekennzeichnet, dass*** die Heizwasserkreislauf seitige, weitere Stellventileinrichtung (6) ein Heizwassersteuerkolben (16) aus einem Kunststoffmaterial, insbesondere aus Polytetrafluorethylen (PTFE), aufweist.

13. Strömungsmengenregler (1) nach einem der Ansprüche 1 bis 12, ***dadurch gekennzeichnet, dass*** das Betätigungselement (17) aus einem Kunststoffmaterial oder einem Compound hieraus, insbesondere aus einem Karbonfaser verstärkten Kunststoffmaterial, oder aus einem Keramikmaterial hergestellt ist.

14. Strömungsmengenregler (1) nach einem der Ansprüche 1 bis 13, ***dadurch gekennzeichnet, dass*** das Betätigungselement (17) bereichsweise Querschnittsreduzierungen, insbesondere durch Materialaussparungen (117), aufweist, um eine Wärmeübertragung zwischen den Gehäuseteilen (7, 8) der Stellventileinrichtungen (5, 6) zu reduzieren.

15. Strömungsmengenregler (1) nach einem der Ansprüche 1 bis 14, ***dadurch gekennzeichnet, dass*** das Betätigungselement (17) zumindest teilweise von dem Koppelteil (65) zum Koppeln der beiden Gehäuseteile(7, 8) der Stellventileinrichtungen (5, 6) umgeben ist.

16. Strömungsmengenregler (1) nach einem der Ansprüche 1 bis 15, ***dadurch gekennzeichnet, dass*** wenigstens teilweise Flächen, insbesondere Wasserkontaktflächen, Gleitflächen oder dergleichen, von Bauteilen des Strömungsmengenreglers (1) Beschichtungen, insbesondere Antihaft-, Gleit-, und/oder Korrosionsbeschichtungen, wie etwa Xylan©-Beschichtungen 8110/G0975 grey/black aufweisen.

17. Heizung-Brauchwasser-Anlage (2) zum Erwärmen von Brauchwasser mit einem Strömungsmengenregler (1) zum Regeln eines Heizwasservolumenstroms (4) in Abhängigkeit von einem an wenigstens einer Zapfstelle angeforderten Brauchwasservolumenstrom (3), wobei der Strömungsmengenregler (1) zwei durch ein gemeinsames Betätigungselement (17) regelungstechnisch miteinander wirkverbundene Stellventileinrichtungen (5, 6) umfasst, ***gekennzeichnet durch*** einen Strömungsmengenregler (1) nach einem der vorhergehenden Ansprüche.

18. Heizung-Brauchwasser-Anlage (2) nach Anspruch 17, ***dadurch gekennzeichnet, dass*** bei herkömmlichen Strömungsmengenregler-Anschlussmaßen von ca. 95,2 mm einerseits und von ca. 105 mm andererseits ein Regelweg des Betätigungselements (17) des Strömungsmengenreglers (1) mehr als 16 mm, vorzugsweise mehr als 18 mm, und insbesondere 19,75 mm, beträgt

## Claims

1. Flow rate controller (1) for controlling fluid volume flows (3, 4) of a heating service water installation (2) comprising a first control valve unit (5) on the service water circuit side with a first housing part (7) of the flow rate controller (1) and comprising a further control valve unit (6) on the heating water circuit side having an additional housing part (8) of the flow rate controller (1), in which the first control valve unit (5) and the further control valve unit (6) are operatively interconnected by means of an operating element (17) for operating control pistons (15, 16) of the flow rate controller (1); the first housing part (7) and the additional housing part (8) being firmly, but releasably interconnected via a coupling piece (65); **characterized in that** the coupling piece (65) is at least partly made of a material with lower thermal conductivity than one of the housing parts (7, 8) and preferably surrounds the operating element (17) concentrically, causing the two control valve units (5, 6) to be thermally uncoupled from each other such that heat transmission between the two housing parts (7, 8) of the control valve units (5, 6) is interrupted or at least significantly reduced such that undesired heating of service water at the flow rate controller (1) is prevented.

2. Flow rate controller (1) for controlling fluid volume flows of a heating service water installation (2) comprising a first control valve unit (5) on the service water circuit side with a first housing part (7) of the flow rate controller (1) and comprising a further control valve unit (6) on the heating water circuit side having an additional housing part (8) of the flow rate controller (1), in which the first control valve unit (5) and the further control valve unit (6) are operatively interconnected, on the one hand, in a housing coupling portion (10) and, on the other hand, by means of an operating element (17) for operating control pistons (15, 16) of the flow rate controller (1); the first housing part (7) and the additional housing part (8) being firmly, but releasably interconnected via a coupling piece (65); **characterized in that** the coupling piece (65) is at least partly made of a material with lower thermal conductivity than one of the housing parts (7, 8) and preferably surrounds the operating element (17) concentrically, causing at least one of the housing parts (7, 8) to be embodied such in the housing coupling portion (10) that heat transmission to the other housing part (7, 8) is interrupted or at least significantly reduced such that undesired heating of service water at the flow rate controller (1) is prevented.

3. Flow rate controller (1) for controlling fluid volume flows of a heating service water installation (2) comprising a first control valve unit (5) on the service water circuit side with a first housing part (7) of the flow rate controller (1) and comprising a further control valve unit (6) on the heating water circuit side having an additional housing part (8) of the flow rate controller (1), in which the first control valve unit (5) and the further control valve unit (6) are operatively interconnected by an operating element (17),
the first housing part (7) and the second housing part (8) being mutually separated physically by a coupling piece (65); **characterized in that** the coupling piece (65) has a thermal conductivity α ≤ 10 W/(m*K), preferably a thermal conductivity α ≤ 1.0 W/(m*K), such that a heat transmission between the two housing parts (7, 8) of the control valve units (5, 6) is interrupted or at least significantly reduced so as to avoid undesired heating of service water at the flow rate controller (1).

4. Flow rate controller (1) according to Claim 1, 2 or 3, ***characterized in that*** the coupling piece (65) is made of a plastic material or a compound thereof, in particular of polyoxymethylene (POM).

5. Flow rate controller (1) according to one of Claims 1, 2 or 3, ***characterized in that*** the coupling piece (65) has at least one area (85) reduced in cross-section so as to reduce heat transmission between the housing parts (7, 8).

6. Flow rate controller according to one of Claims 3 to 5, ***characterized in that*** the coupling piece (65) has at least one seal seat (108, 109) for sealing elements (101, 107).

7. Flow rate controller (1) according to one of Claims 1 to 6, ***characterized in that*** at least one of the housing parts (7, 8), preferably the additional housing part (8), has cooling rib elements (84) for reducing heat transmission between the housing parts (7, 8).

8. Flow rate controller (1) according to one of Claims 1 to 7, ***characterized in that*** at least one of the housing parts (7, 8) comprises a receptacle pin (67) or a receptacle bushing (70), the receptacle pin (67) and/or the receptacle bushing (70) having material recesses (71, 72) for reducing heat-energy transferring contact surfaces between the housing parts (7, 8).

9. Flow rate controller (1) according to one of Claims 1 to 7, ***characterized in that*** at least one of the housing parts (7, 8) comprises a receptacle pin (67) or a receptacle bushing (70) on which a coupling piece (65) for connecting the first housing part (7) and the additional housing part (8) can be arranged, the receptacle pin (67) and/or the receptacle bushing (70) having material recesses (71, 72) for reducing heat-energy transferring contact surfaces between the housing parts (7, 8) and the coupling piece (65).

10. Flow rate controller (1) according to Claim 8 or 9, ***characterized in that*** material recesses (72) in the receptacle bushing (70) and/or the receptacle pin (67) extend with their respective longitudinal extension (75) in the longitudinal direction (19) of the operating element (17).

11. Flow rate controller (1) according to one of Claims 1 to 10, ***characterized in that*** the first control valve unit (5) on the service water circuit side has a service water control piston (15) made of a plastic material, in particular polyoxymethylene (POM).

12. Flow rate controller (1) according to one of Claims 1 to 11, ***characterized in that*** the additional control valve unit (6) on the heating water circuit side has a heating water control piston (16) made of a plastic material, in particular polytetrafluoroethylene (PTFE).

13. Flow rate controller (1) according to one of Claims 1 to 12, ***characterized in that*** the operating element (17) is made of a plastic material or a compound thereof, in particular of a carbon fiber-reinforced plastic material, or a ceramic material.

14. Flow rate controller (1) according to one of Claims 1 to 13, ***characterized in that*** the operating element (17) has, in portions, cross-section reductions, in particular formed by material recesses (117), so as to reduce heat transmission between the housing parts (7, 8) of the control valve units (5, 6).

15. Flow rate controller (1) according to one of Claims 1 to 14, ***characterized in that*** the operating element (17) is at least partly surrounded by the coupling piece (65) for coupling the two housing parts (7, 8) of the control valve units (5, 6).

16. Flow rate controller (1) according to one of Claims 1 to 15, ***characterized in that*** surfaces, in particular water contact surfaces, sliding surfaces or the like, of components of the flow rate controller (1) at least partly have coatings, in particular nonstick, sliding and/or corrosion coatings, such as Xylan© coatings 8110/G0975 grey/black.

17. Heating service water installation (2) for heating service water with a flow rate controller (1) for controlling a heating water volume flow (4) in accordance with a service water volume flow (3) requested at at least one extraction point, the flow rate controller (1) comprising two control valve units (5, 6) operatively interconnected by control technology by means of a common operating element (17), ***characterized by a*** flow rate controller (1) according to one of the above Claims.

18. Heating service water installation (2) according to Claim 17, ***characterized in that*** with conventional flow rate controller connection dimensions of approximately 95.2 mm on the one side and approximately 105 mm on the other side, a travel of the operating element (17) of the flow rate controller (1) is more than 16 mm, preferably more than 18 mm and in particular 19.75 mm.

## Revendications

1. Régulateur de débit (1), destiné à régler des débits volumétriques de fluide (3, 4) d'une installation de chauffe-eau sanitaire (2), comprenant un premier système de vanne de régulation (5), du côté du circuit d'eau sanitaire, pourvu d'une première partie de corps (7) du régulateur de débit (1) et comprenant un système de vanne de régulation (6) supplémentaire, du côté du circuit d'eau de chauffage, pourvu d'une autre partie de corps (8) du régulateur de débit (1), sur lequel le premier système de vanne de régulation (5) et le système de vanne de régulation (6) supplémentaire sont en liaison active réciproque au moyen d'un élément d'actionnement (17), destiné à actionner des pistons de commande (15, 16) du régulateur de débit (1), la première partie de corps (7) et l'autre partie de corps (8) étant assemblées l'une à l'autre de manière fixe, mais amovible par une pièce d'accouplement (65), **caractérisé en ce que** la pièce d'accouplement (65) est fabriquée au moins en partie en une matière faisant preuve d'une conductibilité thermique plus faible que celle de l'une des parties de corps (7, 8) et entoure de préférence de manière concentrique l'élément d'actionnement (17), suite à quoi les deux systèmes de vanne de régulation (5, 6) sont thermiquement désaccouplés l'un de l'autre, de telle sorte qu'un transfert thermique entre les deux parties de corps (7, 8) des systèmes de vanne de régulation (5, 6) soit évité ou pour le moins réduit de manière significative, de sorte à éviter un échauffement non souhaitable d'eau sanitaire sur le régulateur de débit (1).

2. Régulateur de débit (1), destiné à régler des débits volumétriques de fluide d'une installation de chauffe-eau sanitaire (2), comprenant un premier système de vanne de régulation (5) du côté du circuit d'eau sanitaire, pourvu d'une première partie de corps (7) du régulateur de débit (1) et comprenant un système de vanne de régulation (6) supplémentaire, du côté du circuit d'eau de chauffage, pourvu d'une autre partie de corps (8) du régulateur de débit (1), sur lequel le premier système de vanne de régulation (5) et le système de vanne de régulation (6) supplémentaire sont en liaison active réciproque, d'une part dans une zone d'accouplement des corps (10) et d'autre part au moyen d'un élément d'actionnement (17), destiné à actionner des pistons de commande (15, 16) du régulateur de débit (1), la première partie de corps (7) et l'autre partie de corps (8) étant assemblées l'une à l'autre de manière fixe, mais amovible par une pièce d'accouplement (65), **caractérisé en ce que** la pièce d'accouplement (65) est fabriquée au moins en partie en une matière faisant preuve d'une conductibilité thermique plus faible que celle de l'une des parties de corps (7, 8) et entoure de préférence de manière concentrique l'élément d'actionnement (17), suite à quoi, au moins l'une des parties de corps (7, 8) dans la zone d'accouplement des corps (10) est conçue de telle sorte, qu'un transfert thermique sur l'autre des partie de corps (7, 8) soit évité ou pour le moins réduit de manière significative, de sorte à éviter un échauffement non souhaitable d'eau sanitaire sur le régulateur de débit (1).

3. Régulateur de débit (1), destiné à régler des débits volumétriques de fluide d'une installation de chauffe-eau sanitaire (2), comprenant un premier système de vanne de régulation (5) du côté du circuit d'eau sanitaire, pourvu d'une première partie de corps (7) du régulateur de débit (1) et comprenant un système de vanne de régulation (6) supplémentaire, du côté du circuit d'eau de chauffage, pourvu d'une autre partie de corps (8) du régulateur de débit (1), sur lequel le premier système de vanne de régulation (5) et le système de vanne de régulation (6) supplémentaire sont en liaison active réciproque au moyen d'un élément d'actionnement (17), la première partie de corps (7) et la deuxième partie de corps (8) étant physiquement séparées l'une de l'autre par une pièce d'accouplement (65), **caractérisé en ce qu'**une conductivité thermique α ≤ 10 W/(m • K), de préférence une conductivité thermique α ≤ 1,0 W/(m • K) est intrinsèque à la pièce d'accouplement (65), de sorte qu'un transfert thermique entre les deux parties de corps (7, 8) des systèmes de vanne de régulation (5, 6) soit évité ou pour le moins réduit de manière significative, de sorte à éviter un échauffement non souhaitable d'eau sanitaire sur le régulateur de débit (1).

4. Régulateur de débit (1) selon la revendication 1, 2 ou 3, **caractérisé en ce que** la pièce d'accouplement (65) est fabriquée en une matière plastique ou en un composite de celle-ci, notamment en polyoxyméthylène (POM).

5. Régulateur de débit (1) selon l'une quelconque des revendications 1, 2 ou 3, **caractérisé en ce que** la pièce d'accouplement (65) comporte au moins une zone (85) à section transversale réduite, pour réduire une transmission thermique entre les parties de corps (7, 8).

6. Régulateur de débit selon l'une quelconque des revendications 3 à 5, **caractérisé en ce que** la pièce d'accouplement (65) comporte au moins un siège de joint (108, 109) pour des éléments d'étanchéité (101, 107).

7. Régulateur de débit (1) selon l'une quelconque des revendications 1 à 6, **caractérisé en ce qu'**au moins l'une des parties de corps (7, 8), de préférence l'autre partie de corps (8), comporte des éléments à ailettes de refroidissement (84), pour réduire une transmission thermique entre les parties de corps (7, 8).

8. Régulateur de débit (1) selon l'une quelconque des revendications 1 à 7, **caractérisé en ce qu'**au moins l'une des parties de corps (7, 8) comprend un tenon de logement (67) ou une douille de logement (70), le tenon de logement (67) et/ou la douille de logement (70) comportant des évidements de matière (71, 72), pour réduire des surfaces de contact transmettant l'énergie thermique entre les parties de corps (7, 8).

9. Régulateur de débit (1) selon l'une quelconque des revendications 1 à 7, **caractérisé en ce qu'**au moins l'une des parties de corps (7, 8) comprend un tenon de logement (67) ou une douille de logement (70) sur lequel/laquelle peut être placée une pièce d'accouplement (65) destinée à assembler la première partie de corps (7) et l'autre partie de corps (8), le tenon de logement (67) et/ou la douille de logement (70) comportant des évidements de matière (71, 72), pour réduire des surfaces de contact transmettant l'énergie thermique entre les parties de corps (7, 8) et la pièce d'accouplement (65).

10. Régulateur de débit (1) selon la revendication 8 ou 9, **caractérisé en ce que** des évidements de matière (72) sur la douille de logement (70) et/ou le tenon de logement (67) s'étendent par leur extension longitudinale (75) respective dans la direction longitudinale (19) de l'élément d'actionnement (17).

11. Régulateur de débit (1) selon l'une quelconque des revendications 1 à 10, **caractérisé en ce que** le premier système de vanne de régulation (5), du côté du circuit d'eau sanitaire comporte un piston de commande d'eau sanitaire (15) en une matière plastique, notamment en polyoxyméthylène (POM).

12. Régulateur de débit (1) selon l'une quelconque des revendications 1 à 11, **caractérisé en ce que** le système de vanne de régulation (6) supplémentaire, du côté du circuit d'eau de chauffage comporte un piston de commande d'eau de chauffage (16) en une matière plastique, notamment en polytétrafluoroéthylène (PTFE).

13. Régulateur de débit (1) selon l'une quelconque des revendications 1 à 12, **caractérisé en ce que** l'élément d'actionnement (17) est fabriqué en une matière plastique ou en un composite de celle-ci, notamment en une matière plastique renforcée par fibres de carbone ou en une matière céramique.

14. Régulateur de débit (1) selon l'une quelconque des revendications 1 à 13, **caractérisé en ce que** l'élément d'actionnement (17) comporte par endroits des réductions de section transversale, notamment par des évidements de matière (117), pour réduire une transmission thermique entre les parties de corps (7, 8) des systèmes de vanne de régulation (5, 6).

15. Régulateur de débit (1) selon l'une quelconque des revendications 1 à 14, **caractérisé en ce que** l'élément d'actionnement (17) est entouré au moins partiellement par la pièce d'accouplement (65), pour accoupler les deux parties de corps (7, 8) des systèmes de vanne de régulation (5, 6).

16. Régulateur de débit (1) selon l'une quelconque des revendications 1 à 15, **caractérisé en ce qu'**au moins partiellement des surfaces, notamment des surfaces en contact avec l'eau, des surfaces de glissement ou similaires de composants du régulateur de débit (1) comportent des revêtements, notamment des revêtements antiadhérents, des revêtements de glissement et/ou des revêtements anticorrosion, comme par exemple des revêtements de Xylan© 8110/G0975 grey/black.

17. Installation de chauffe-eau sanitaire (2) destinée à chauffer de l'eau sanitaire à l'aide d'un régulateur de débit (1) pour le réglage d'un débit volumétrique d'eau chaude (4) en fonction d'un flux volumétrique d'eau sanitaire (3) exigé sur au moins un point de soutirage, le régulateur de débit (1) comprenant deux systèmes de vanne de régulation (5, 6) en liaison active réciproque à des fins de régulation par un élément d'actionnement (17) commun, **caractérisée par** un régulateur de débit (1) selon l'une quelconque des revendications précédentes.

18. Installation de chauffe-eau sanitaire (2) selon la revendication 17, **caractérisé en ce que** dans le cas de cotes de raccordement conventionnelles du régulateur de débit d'environ 95,2 mm d'une part et d'environ 105 mm d'autre part, une course de réglage de l'élément d'actionnement (17) du régulateur de débit (1) est supérieure à 16 mm, de préférence, supérieure à 18 mm, et notamment de 19,75 mm.
